**Europäisches Patentamt**

**European Patent Office**

**Office européen des brevets**

(11) Veröffentlichungsnummer: **0 497 120 A1**

## EUROPÄISCHE PATENTANMELDUNG

(21) Anmeldenummer: **92100379.4**

(51) Int. Cl.⁵: **B60C 23/00**

(22) Anmeldetag: **11.01.92**

(30) Priorität: **31.01.91 DE 4102769**

(43) Veröffentlichungstag der Anmeldung:
**05.08.92 Patentblatt 92/32**

(84) Benannte Vertragsstaaten:
**DE ES FR GB IT**

(71) Anmelder: **TELEFUNKEN electronic GmbH**
**Theresienstrasse 2**
**W-7100 Heilbronn(DE)**

(72) Erfinder: **Doerfler, Reiner, Dr.**
**Maxplatz 7**
**W-8500 Nürnberg 1(DE)**
Erfinder: **Hettich, Gerhard, Dr.**
**Martin-Renz-Strasse 8**
**W-8501 Dietenhofen(DE)**
Erfinder: **Walter, Willibald**
**Lilienstrasse 14**
**W-8507 Unterasbach(DE)**

(74) Vertreter: **Maute, Hans-Jürgen, Dipl.-Ing.**
**TELEFUNKEN electronic GmbH**
**Theresienstrasse 2**
**W-7100 Heilbronn(DE)**

(54) **System zur Luftdruckkontrolle von Kfz-Reifen.**

(57) Bei einem System zur Luftdruckkontrolle von Kraftfahrzeug-Reifen sind Mittel (2) zur Erfassung der Raddrehzahlen und eine zentrale Recheneinheit (6) vorgesehen, die die ihr zugeführten Raddrehzahl-Meßwerte verarbeitet; des weiteren werden Daten, die zu eliminierenden Störgrößen entsprechen, der zentralen Recheneinheit extern zugeführt und/oder in der zentralen Recheneinheit fest vorgegeben. Die zentrale Recheneinheit gibt ein Ausgangssignal ab, das von Luftdruckunterschieden der Reifen nach Elimination der Störgrößen abhängt, wobei eine Ausgabeeinheit (5) vorgesehen ist, die vom Ausgangssignal der zentralen Recheneinheit angesteuert wird.

FIG.

EP 0 497 120 A1

Der richtige Luftdruck von Kfz-Reifen ist entscheidend für die Fahrsicherheit und die Reifenhaltbarkeit; selbst kurzzeitiges Fahren mit einem zu niedrigen Luftdruck schädigt den Reifen dauerhaft, zudem ist Luftdruckmangel eine häufige Unfallursache.

Da selbst erfahrene Autofahrer falsche Reifendrükke - beispielsweise einen extremen Luftdruckverlust - nicht bemerken, werden aus Sicherheitsgründen bei manchen Kfz-Typen Systeme zur Kontrolle des Reifendrucks eingesetzt; diese verwenden einen in die Felge des Kfz-Rads integrierten Drucksensor, der bei einem Druckverlust anspricht. Problematisch hierbei ist jedoch die Informationsübertragung von der drehenden Felge auf die feststehende Fahrzeugkarosserie; darüberhinaus sind derartige Systeme mit relativ hohen Kosten verbunden.

Der Erfindung liegt die Aufgabe zugrunde, ein einfaches und preiswertes System zur Kontrolle des Luftdrucks in Kfz-Reifen anzugeben, mit dem zumindest auftretende Luftdruckverluste in einem oder mehreren Reifen sicher erkannt werden.

Diese Aufgabe wird erfindungsgemäß durch die Merkmale im Kennzeichen des Anspruchs 1 gelöst.

Vorteilhafte Weiterbildungen des erfindungsgemäßen Verfahrens ergeben sich aus den Unteransprüchen.

Der Erfindung liegt die Erkenntnis zugrunde, daß der Luftdruck im Reifen den Abrollumfang und damit auch dessen Drehzahl beeinflußt, so daß umgekehrt auch der Luftdruck aus der Raddrehzahl bestimmt werden kann; störende Faktoren bzw. Störgrößen, die den Nutzeffekt überlagern, werden dabei sukzessive mit Hilfe externer Meßgrößen bzw. geeigneter Modellannahmen eliminiert. Die notwendige Raddrehzahl-Information kann entweder mittels eines Raddrehzahlfühlers bzw. -sensors gewonnen und von einem Mikroprozessor oder Microcontroller verarbeitet werden, oder es können - beispielsweise bei ABS- oder ASR-Systemen - bereits vorhandene Konfigurationen mit verwendet werden.

Insbesondere kann ein System zur Luftdruckkontrolle bzw. zur Bestimmung mangelnden Luftdrukkes in den Reifen - ein "Luftdruckkontrollsystem" (LKS) oder "Plattenwarnsystem" - entwickelt werden, da eine Abnahme des Luftdrucks in einem Reifen zu einer Verringerung des Abrollumfangs führt und sich dadurch dessen Drehzahl erhöht; aus dieser Drehzahländerung kann mit Hilfe des erfindungsgemäßen Systems der Luftdruckverlust ermittelt werden. Das LKS-System liefert in seiner einfachsten Version eine pauschale Aussage, ob ein Luftdruckverlust (Platten) in einem oder mehreren Reifen des Kfz aufgetreten ist oder nicht, wobei das LKS-System bei Fahrzeugen mit beliebiger Achsenzahl bzw. Reifenzahl und beliebiger Antriebsart - Heckantrieb, Frontantrieb oder Allradantrieb - eingesetzt werden kann; der momentane Status der Reifen kann - beispielsweise mittels einer geeigneten optischen oder akustischen Anzeige - dem Fahrer des Kraftfahrzeugs übermittelt werden. Bei Bereitstellung und Verarbeitung von Zusatz-Informationen bzw. zusätzlicher fahrzeugspezifischer Meßgrößen mittels weiterer Sensoren - beispielsweise Beschleunigungssensoren, Lenkwinkelsensoren oder Beladungssensoren etc. - kann auch der betreffende Reifen mit vermindertem Luftdruck ermittelt werden.

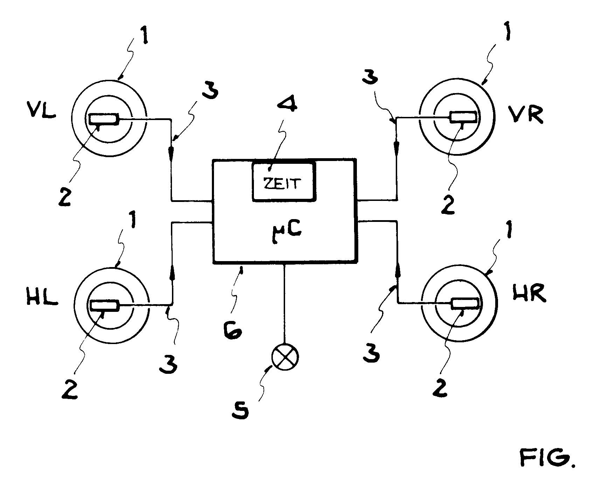

Das erfindungsgemäße System zur Kontrolle des Reifendrucks soll nachstehend anhand eines Ausführungsbeispiels erläutert werden; dabei wird ein LKS-System für ein zweiachsiges Kraftfahrzeug beschrieben, dessen schematischer Aufbau in der Figur dargestellt ist.

Die Drehzahlen der einzelnen Räder (VR, VL, HR, HL) an den beiden Achsen des Kraftfahrzeugs werden von den Drehzahlfühlern 2 bzw. Drehzahlsensoren erfaßt und über Sensorleitungen 3 einem Microcontroller 6 zugeführt, der die Auswertung der Daten vornimmt und den zeitlichen Ablauf mittels des Timers 4 steuert. Bei der Feststellung eines zu niedrigen Luftdrucks in einem Reifen 1 wird die optische Anzeige 5 aktiviert, die beispielsweise wie die Öldruck-Kontrolleuchte oder Generator-Kontrolleuchte im Armaturenbrett integriert werden kann. Falls im Kraftfahrzeug bereits ein ASR- oder ABS-System zur Verfügung steht, können deren Sensoren und Mikroprozessoren übernommen werden und durch das LKS-System ergänzt werden.

Ein Druckverlust von beispielsweise 0,5 bar in einem Reifen, verursacht wegen einer Verringerung des Abrollumfangs eine Drehzahländerung von 0,2 bis 0,3 %; dieser Effekt wird jedoch von Störeffekten überlagert, die wesentlich größere Drehzahländerungen bewirken. Da durch die Raddrehzahl-Information von vier Rädern vier Informationsquellen bzw. vier Gleichungen für eine unbekannte Größe (Luftdruckänderung) zur Verfügung stehen, lassen sich die nachstehend aufgeführten Störeffekte weitgehend eliminieren:

- Aufgrund von Reifenfertigungstoleranzen - der statische Umfang eines Reifens kann bis zu 5 % schwanken - sind unterschiedliche dynamische Radumfänge und damit unterschiedliche Drehzahlen möglich. Diese dynamischen Radumfänge bzw. die Verhältnisse der einzelnen Radumfänge können mittels einer Eichfahrt, die mit korrekt eingestelltem Luftdruck bei einer Geradeaus-Fahrt durchgeführt werden muß, ermittelt und in der Recheneinheit gespeichert werden.

- Bei einer Kurvenfahrt ergibt sich eine Drehzahldifferenz zwischen den kurveninneren und den kurvenäußeren Rädern; beispielsweise beträgt diese bei einem Kurvenradius von 20 m für das kurveninnere Rad und einer Spurbreite von 1,6 m bereits 8 %. Diese Störgröße Kurvenfahrt wird durch einen Drehzahlvergleich der Räder auf der rechten und der linken Fahrzeugseite eliminiert: mittels eines Kurvenmodells - die Räder können aufgrund der Achsgeometrie nur in einer bestimmten Stellung zueinander stehen - werden die Kurvenradien dreier Räder als Funktion des vierten Rades ausgedrückt. Die drei Radiengleichungen können zu zwei Radfrequenzgleichungen transformiert werden. Das beschriebene Kurvenmodell wird jeweils für einen Zeitbereich ausgewertet. Die Zeitbereiche müssen derart klein gewählt werden, daß die Radien als Konstanten (Kreisfahrt) oder als unendlich groß (Geradeausfahrt) betrachtet werden können.

- Der Schlupf an den Rädern - diese Größe hängt von der Fahrweise, dem Straßenzustand, der Witterung etc. ab - bewirkt in der Regel Drehzahlunterschiede von ca. 1 - 2 %, wobei jedoch auch Werte von mehr als 10 % auftreten können. Daneben gibt es noch weitere Effekte - wie unterschiedliche Beladung, Spur-, Sturz- oder Radstandsänderungen - mit geringem Einfluß auf die Rad-Drehzahlverhältnisse.

Die durch Schlupf oder beispielsweise unterschiedliche Beladungen der Achsen bedingten Drehzahlunterschiede an den einzelnen Achsen werden durch Einführung eines Parameters kompensiert. Die Elimination dieses Parameters reduziert das Gleichungssystem mit zwei Gleichungen auf eine Gleichung. Bei dem soeben beschriebenen Konzept wird vorausgesetzt, daß die Störgrößen Schlupf, Radlasteinfluß, ... achsweise gleich sind; damit kann auch das gleichzeitige Auftreten von Druckverlusten bei Reifen an einer Achse von diesem LKS-System nicht festgestellt werden.

Durch Elimination der Störgrößen erhält man eine Funktion, die nur noch von einem einzigen Parameter abhängt ("Kontrollparameter" als Variable einer Kontrollfunktion); diese Funktion kann gemessen werden, wobei anhand deren Betrag entschieden wird, ob ein Luftdruckverlust vorliegt oder nicht:

- liegt die Kontrollfunktion unterhalb eines vorgegebenen - empirisch bestimmten - Schwellwerts, ist der Luftdruck in Ordnung
- falls die Kontrollfunktion längere Zeit Werte oberhalb des Schwellwerts annimmt, kann auf einen Luftdruckverlust in einem oder mehreren Reifen (Platten) geschlossen werden.

Durch Berücksichtigung weiterer Informationen mittels weiterer Sensoren - Lenkwinkelsensor, Beschleunigungssensor, Beladungssensor etc. - ist eine zusätzliche Informationsquelle bzw. Gleichung vorhanden, so daß in einem erweiterten LKS-System auch das betreffende Rad mit dem verminderten Luftdruck ermittelt werden kann. Um einzelne Ausrutscher bzw. Spitzen in der Kontrollfunktion zu eliminieren - diese treten vorzugsweise durch kurzzeitiges extremes Schlupfverhalten auf - wird eine geeignete Filterung (Mittelung) durchgeführt, wobei beispielsweise eine sogenannte Medianfilterung eingesetzt werden kann. Umgekehrt kann, falls die Kontrollfunktion längere Zeit zu hohe Werte liefert, die nicht mit Druckverlust erklärbar sind, auf extremes Schlupfverhalten geschlossen werden; dazu kann ein zusätzlicher Schwellwert definiert werden, bei dessen Überschreiten eine weitere Warnlampe zur Anzeige des extremen Schlupfverhaltens aktiviert werden kann.

## Patentansprüche

1. System zur Luftdruckkontrolle von Kraftfahrzeug-Reifen, dadurch gekennzeichnet, daß Mittel (2) zur Erfassung der Raddrehzahlen und eine zentrale Recheneinheit (6) vorgesehen sind, die die ihr zugeführten Raddrehzahl-Meßwerte verarbeitet, daß Daten, die zu eliminierenden Störgrößen entsprechen, der zentralen Recheneinheit (6) extern zugeführt werden und/oder in der zentralen Recheneinheit (6) fest vorgegeben sind, und daß die zentrale Recheneinheit (6) ein Ausgangssignal abgibt, das von Luftdruckunterschieden der Reifen (1) nach Elimination der Störgrößen abhängt.

2. System nach Anspruch 1, dadurch gekennzeichnet, daß Drehzahlfühler oder Drehzahlsensoren (2) vorgesehen sind, die die Raddrehzahlen erfassen, und daß die Raddrehzahl-Meßwerte über Sensorleitungen (3) der zentralen Recheneinheit (6) zugeführt werden.

3. System nach Anspruch 1 oder 2, dadurch gekennzeichnet, daß die zentrale Recheneinheit (6) ein Mikroprozessor oder Microcontroller ist.

4. System nach einem der Ansprüche 1 bis 3, dadurch gekennzeichnet, daß eine Ausgabeeinheit (5) vorgesehen ist, die vom Ausgangssignal der zentralen Recheneinheit (6) angesteuert wird.

5. System nach Anspruch 4, dadurch gekennzeichnet, daß die Ausgabeeinheit (5) eine Anzeigevorrichtung ist, die im Armaturenbrett des Kraftfahrzeugs installiert ist, und daß die Anzeigevorrichtung in Abhängigkeit des Reifenluftdrucks ein optisches oder akustisches Signal ausgibt.

6. System nach einem der Ansprüche 1 bis 5, dadurch gekennzeichnet, daß weitere Mittel zur Erfassung zusätzlicher fahrzeugspezifischer Meßgrößen vorgesehen sind, und daß diese Meßdaten der zentralen Recheneinheit (6) über Meßleitungen extern zugeführt werden.

7. System nach einem der Ansprüche 1 bis 6, dadurch gekennzeichnet, daß es mit einem ABS-System oder ASR-System kombiniert wird.

8. Verfahren zur Erfassung von Luftdruckunterschieden von Kraftfahrzeugreifen, dadurch gekennzeichnet, daß die Drehzahlen aller Räder gemessen und einer zentralen Recheneinheit (6) zur Verarbeitung zugeführt werden, daß durch die Recheneinheit (6) Störeinflüsse eliminiert werden und eine Kontrollfunktion gebildet wird, und daß von der zentralen Recheneinheit (6) in Abhängigkeit des Betrags der Kontrollfunktion ein Ausgangssignal abgegeben wird.

9. Verfahren nach Anspruch 8, dadurch gekennzeichnet, daß zum Ausgleich von Reifenfertigungstoleranzen eine Geradeaus-Fahrt durchgeführt wird, wobei die derart ermittelten Drehzahlwerte bzw. Meßdaten in der zentralen Recheneinheit (6) gespeichert werden.

10. Verfahren nach Anspruch 8 oder 9, dadurch gekennzeichnet, daß ein Kurvenmodell aufgestellt wird, das Drehzahlunterschiede aufgrund Kurvenfahrten berücksichtigt, und daß die entsprechenden Daten in der zentralen Recheneinheit (6) gespeichert sind.

11. Verfahren nach einem der Ansprüche 8 bis 10, dadurch gekennzeichnet, daß eine die Störgrößen berücksichtigende Kontrollfunktion berechnet wird, und daß anhand eines Vergleichs der Kontrollfunktion mit einem vorgegebenen Schwellwert bestimmt wird, ob ein Luftdruckmangel vorliegt.

12. Verfahren nach Anspruch 11, dadurch gekennzeichnet, daß in Abhängigkeit des Vergleichs der Kontrollfunktion mit dem Schwellwert ein Ausgangssignal gebildet und eine Anzeigeeinheit (5) angesteuert wird, die Aufschluß darüber gibt, ob in einem oder mehreren Reifen (1) ein signifikanter Luftdruckunterschied vorliegt.

13. Verfahren nach einem der Ansprüche 8 bis 12, dadurch gekennzeichnet, daß zusätzliche fahrzeugspezifische Meßgrößen gemessen werden, so daß der oder die Reifen (1) mit vermindertem Luftdruck spezifiziert werden können.

14. Verfahren nach Anspruch 13, dadurch gekennzeichnet, daß der Lenkwinkel, die Beladung, die Beschleunigung oder die Absolutgeschwindigkeit mittels geeigneter Sensoren bestimmt werden.

FIG.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 291 217 (SP TYRES) <br><br> * the whole document * | 1-9, 11-14 | B60C23/00 |
| A | | 10 | |
| A | FR-A-2 568 519 (MICHELIN) <br> * page 4, last paragraph * | 9 | |
| A | DE-A-3 236 520 (BOSCH) <br> * page 7, last paragraph * | 14 | |
| A | DE-A-3 630 116 (BOSCH) <br> * the whole document * | 7,14 | |
| P,A | EP-A-0 441 599 (SUMITOMO) <br> * page 4, column 4, paragraph 2 * | 14 | |
| E | EP-A-0 466 535 (RENAULT) <br> * column 5, line 7 - column 9, line 16; figures 1-5 * | 1-14 | |

TECHNICAL FIELDS
SEARCHED (Int. Cl.5)

B60C

The present search report has been drawn up for all claims

| Place of search | Date of completion of the search | Examiner |
|---|---|---|
| THE HAGUE | 08 MAY 1992 | HAGEMAN M. |

EPO FORM 1503 03.82 (P0401)